# EUROPEAN PATENT APPLICATION

(11) **EP 3 106 030 A1**
(43) Date of publication of application: **21.12.2016**
(21) Application number: 15819657.6
(22) Date of filing: 23.06.2015
(51) Int. Cl.: A01M 7/00

(54) **BOOM VIBRATION CONTROL DEVICE AND BOOM SPRAYER**

(30) Priority: 11.07.2014 JP 2014143698
(71) Applicant: KYB Corporation, Tokyo 105-6111 (JP)
(72) Inventor: ITOU, Tatsuo, Tokyo 105-6111 (JP); TOKUDA, Hiroki, Toda-shi Saitama 335-0031 (JP)
(74) Representative: Grünecker Patent- und Rechtsanwälte PartG mbB
(86) International application number: PCT/JP2015/067976
(87) International publication number: WO 2016/006434

(57) **Abstract**

A boom vibration control device 9 includes a fluid pressure cylinder 30 provided between a boom 4 and a boom support body 3, the fluid pressure cylinder 30 biasing the boom 4 in one rotating direction and a metal spring 60 provided between the boom 4 and the boom support body 3, the metal spring 60 biasing the boom 4 in the other rotating direction.

## Description

### TECHNICAL FIELD

The present invention relates to a boom sprayer that sprays a pest control liquid, and a boom vibration control device that suppresses vibration of a boom of the boom sprayer.

### BACKGROUND ART

As a conventional boom sprayer, JP2004-254526A discloses a boom sprayer in which a base section of an elevating link mechanism extending forward is pivotably supported on a moving agricultural machine, a boom support frame is provided in a front section of the elevating link mechanism, and pest control booms are supported rotatably about an oscillation shaft in the front and rear direction formed in this boom support frame.

In the boom sprayer described in JP2004-254526A, a telescopic actuator is placed between the boom support frame and the pest control booms, and the pest control booms are maintained in a predetermined rolling posture by a sensor for detecting an oscillation angle, the sensor being provided in the vicinity of the oscillation shaft and an inclination sensor provided on the side of the moving agricultural machine.

### SUMMARY OF INVENTION

However, in the boom sprayer described in JP2004-254526A, in a case where a working vehicle travels while getting over undulation such as furrows in an agricultural field at the time of operating the boom sprayer, the working vehicle may cyclically repeat rotary movement in the roll direction in which the operating vehicle is rotated about the front and rear axis thereof. In this case, the actuator placed between the boom support frame and the pest control booms cannot absorb vibration inputted to the pest control booms from a vehicle body of the working vehicle, and there is a problem that vibration is caused due to the pest control booms cyclically repeating rotary movement in the roll direction.

An object of the present invention is to suppress vibration of a boom in the roll direction.

According to one aspect of the present invention, a boom vibration control device for suppressing vibration of a boom rotatably and axially supported on a boom support body includes: a fluid pressure cylinder provided between the boom and the boom support body, the fluid pressure cylinder being configured to bias the boom in one rotating direction; and an elastic member provided between the boom and the boom support body, the elastic member being configured to bias the boom in the other rotating direction.

### BRIEF DESCRIPTION OF DRAWINGS

[Fig. 1] Fig. 1 is a plan view of a boom sprayer to which a boom vibration control device according to a first embodiment of the present invention is applied.
[Fig. 2] Fig. 2 is a side view of the boom sprayer to which the boom vibration control device according to the first embodiment of the present invention is applied.
[Fig. 3] Fig. 3 is a perspective view of parts of the boom sprayer to which the boom vibration control device according to the first embodiment of the present invention is applied.
[Fig. 4] Fig. 4 is a configuration diagram of the boom vibration control device according to the first embodiment of the present invention.
[Fig. 5] Fig. 5 is a characteristic diagram showing a relationship between a rotation angle and rotation moment in the first embodiment of the present invention and comparative examples.
[Fig. 6] Fig. 6 is a configuration diagram of a boom vibration control device according to a second embodiment of the present invention.
[Fig. 7] Fig. 7 is a characteristic diagram showing a relationship between a rotation angle and rotation moment in the second embodiment of the present invention and a comparative example.
[Fig. 8] Fig. 8 is a configuration diagram of a boom vibration control device according to a third embodiment of the present invention.
[Fig. 9] Fig. 9 is a configuration diagram of a boom vibration control device according to a fourth embodiment of the present invention.
[Fig. 10] Fig. 10 is a configuration diagram of a boom vibration control device according to a fifth embodiment of the present invention.
[Fig. 11] Fig. 11 is a configuration diagram of a boom vibration control device according to a sixth embodiment of the present invention.

### MODE FOR CARRYING OUT INVENTION

Hereinafter, embodiments of the present invention will be described with reference to the attached drawings. It should be noted that three axes of X, Y, and Z orthogonal to each other are set on the attached figures. The X axis extends in the front and rear direction of a vehicle (substantially horizontal and longitudinal direction), the Y axis extends in the left and right direction of the vehicle (substantially horizontal and lateral direction), and the Z axis extends in the up and down direction of the vehicle (substantially vertical direction). The rotating direction about the X axis is the roll direction, and the rotating direction about the Z axis is the yaw direction in the description of the embodiments.

### <First Embodiment>

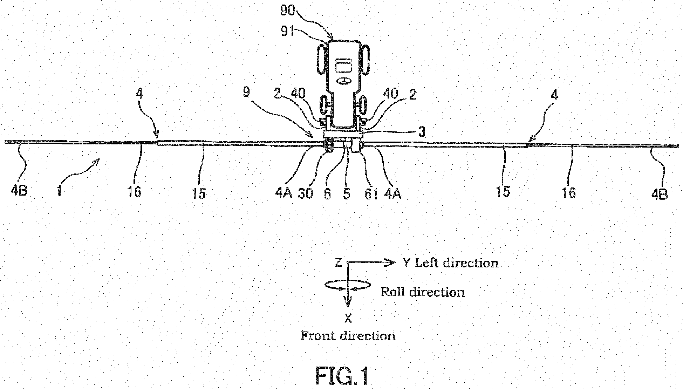

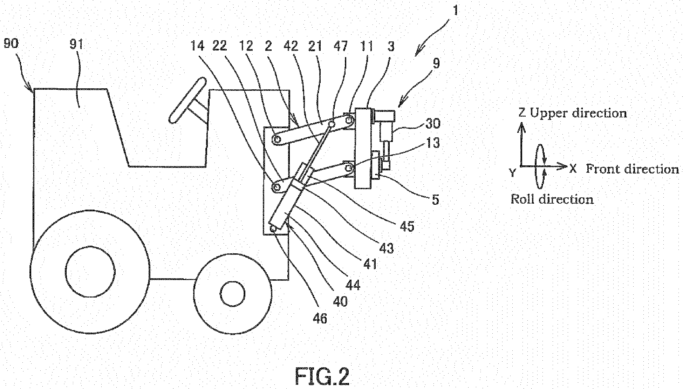

Firstly, with reference to Figs. 1 and 2, a boom sprayer 1 to which a boom vibration control device 9 according to a first embodiment of the present invention is applied will be described.

The boom sprayer 1 shown in Fig. 1 is an agricultural working machine mounted on the front side of a working vehicle 90 that travels in an agricultural field, the operating machine that sprays a pest control liquid (pesticides) from the working vehicle 90.

The boom sprayer 1 includes a pair of booms 4 extending leftward and rightward from the working vehicle 90. Nozzles (not shown) that spray the pest control liquid are attached to the booms 4. At the time of operating the boom sprayer 1, the pest control liquid is sprayed from the nozzles of the booms 4 while the working vehicle 90 travels in the agricultural field.

The boom sprayer 1 includes a pair of link arms 2 attached to a vehicle body 91 of the working vehicle 90, an elevating base 3 supported elevatably with respect to the vehicle body 91 by the link arms 2, a roll base 5 supported rotatably in the roll direction (about the X axis) with respect to the elevating base 3, and the left and right booms 4 extending toward the left side and the right side of the vehicle body 91 (in the Y axis direction) from the roll base 5.

The vehicle body 91, the link arms 2, or the elevating base 3 corresponds to a boom support body. The roll base 5 forms a support section of the booms 4 by which the left and right booms 4 are respectively cantilevered with respect to the elevating base 3.

A base end section 4A of each of the booms 4 is cantilevered rotatably in the yaw direction (about the Z axis) via a stowing hinge (not shown) with respect to the roll base 5, and a leading end section 4B of the boom becomes a free end. In the boom 4, a leading end side frame 16 having the leading end section 4B is telescopically supported by a base end side frame 15 having the base end section 4A.

A state shown in Fig. 1 is a spreading state where the left and right booms 4 extend in the horizontal left and right direction of the vehicle body 91. At the time of stowing the booms 4, firstly, at least one of the booms 4 contracts the leading end side frame 16 from an operating position in the spreading state and stows the leading end side frame 16 into the base end side frame 15. After that, by rotating the base end side frame 15 rearward via the stowing hinge, the boom 4 is folded to extend in the front and rear direction along the side of the vehicle body 91.

The roll base 5 is supported rotatably in the roll direction via a support shaft 6 with respect to the elevating base 3. As the support shaft 6, a columnar pin is used. However, the support shaft is not limited to this but a spherical bearing or the like may be used.

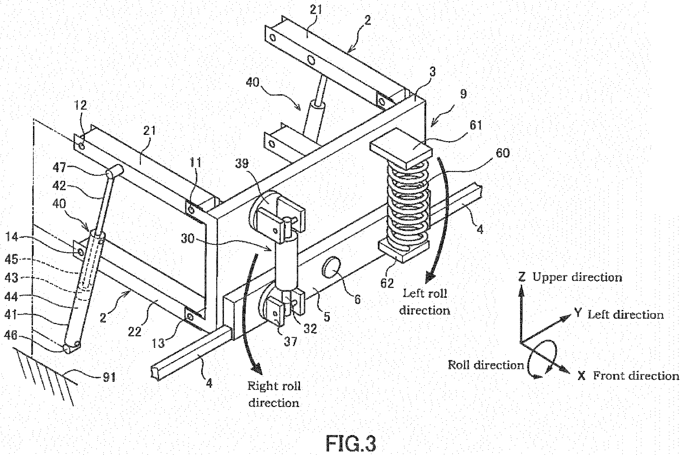

Next, with reference to Figs. 2 and 3, a link mechanism relating to the link arms 2 and an elevating mechanism of the elevating base 3 will be described. Fig. 2 is a side view of the boom sprayer 1 and the link arm 2, and Fig. 3 is a perspective view of the vicinity of the link arms 2 and the elevating base 3.

Each of the link arms 2 includes an upper link 21 and a lower link 22 extending in parallel to each other, and forms the link mechanism of a parallelogram in a side view.

A base end section of the upper link 21 is rotatably coupled to the vehicle body 91 via a pin 12, and a leading end section of the upper link 21 is rotatably coupled to the elevating base 3 via a pin 11. A base end section of the lower link 22 is rotatably coupled to the vehicle body 91 via a pin 14, and a leading end section of the lower link 22 is rotatably coupled to the elevating base 3 via a pin 13.

In such a way, the link arms 2 elevatably support the elevating base 3 in front of the vehicle body 91. Instead of this, a guide rail extending in the Z axis direction may be provided in front of the vehicle body 91 and the elevating base 3 may be elevatably supported by this guide rail.

A pair of elevating cylinders 40 serving as an elevating mechanism is provided on both the left and right sides of the vehicle body 91. Each of the elevating cylinders 40 is placed between the vehicle body 91 and the upper link 21. The elevating cylinder 40 is an actuator adapted to lift and lower the elevating base 3 and the booms 4 by extension and contraction thereof.

The elevating cylinder 40 includes a cylinder tube 41 in which working oil serving as a working fluid is enclosed, a piston rod 42 slidably inserted into the cylinder tube 41, and a piston 43 provided in a base end section of the piston rod 42. In the elevating cylinder 40, a base end section of the cylinder tube 41 is rotatably coupled to the vehicle body 91 via a pillow ball 46, and a leading end section of the piston rod 42 is rotatably coupled to the upper link 21 via a pillow ball 47. The pillow balls 46, 47 are for example formed by ball and spherical bearings. No bored parts are generated in coupling sections of the elevating cylinder 40 owing to the pillow balls 46, 47.

An interior of the cylinder tube 41 is defined into a piston side chamber 44 and a rod side chamber 45 by the piston 43. The working oil is supplied to and discharged from the piston side chamber 44 and the rod side chamber 45 by a working fluid supply and discharge device (not shown), and the elevating cylinder 40 is extended and contracted in accordance with supply and discharge of the working oil. In such a way, the elevating cylinder 40 is a double-acting type fluid pressure cylinder in the present embodiment. Instead of this, as the elevating cylinder 40, a single-acting type fluid pressure cylinder in which the working oil is supplied to and discharged from only one of the piston side chamber 44 and the rod side chamber 45 may be used.

In a case where height of the booms 4 is changed, by extending and contracting the left and right elevating cylinders 40 in synchronization with each other, the left and right link arms 2 are rotated, so that the elevating base 3 and the booms 4 are lifted and lowered with respect to the vehicle body 91. Specifically, when the elevating cylinders 40 are extended, the link arms 2 are rotated upward, so that the elevating base 3 and the booms 4 are lifted. Meanwhile, when the elevating cylinders 40 are contracted, the link arms 2 are rotated downward, so that the elevating base 3 and the booms 4 are lowered. In such a way, in the boom sprayer 1, by extending and contracting the elevating cylinders 40, the height of the booms 4 with respect to crops in the agricultural field can be adjusted.

The boom vibration control device 9 is provided between the elevating base 3 and the roll base 5. The boom vibration control device 9 is to suppress vibration in the roll direction in which the booms 4 are rotated in the left and right roll direction. Thereby, vibration in which the leading end sections 4B of the booms 4 are vibrated in the up and down direction is suppressed, so that the leading end sections 4B are prevented from being in contact with agricultural crops and the like in the agricultural field. The boom vibration control device 9 is provided between any of the elevating base 3, the vehicle body 91, and the link arms 2, and any of the booms 4 and the roll base 5.

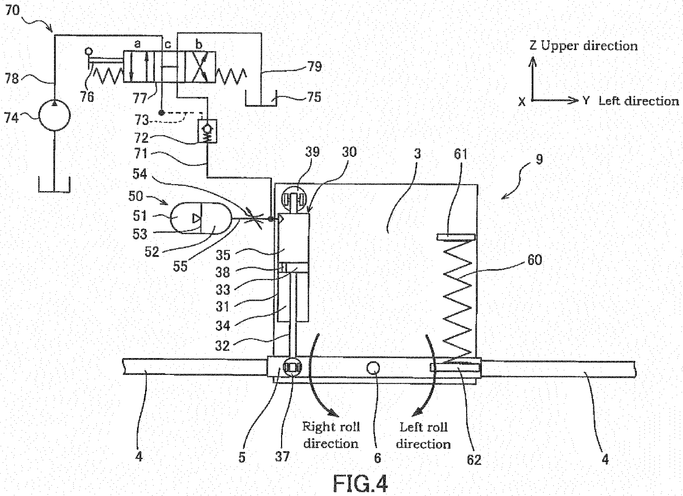

Next, with reference to Figs. 3 and 4, the boom vibration control device 9 will be described. Fig. 4 is a schematic configuration diagram of the boom vibration control device 9.

As shown by arrows in Figs. 3 and 4, the anti-clockwise rotating direction about the X axis when the working vehicle 90 is seen from the front side is the right roll direction (one rotating direction), and the clockwise rotating direction is the left roll direction (the other rotating direction) in the following description.

The boom vibration control device 9 includes a fluid pressure cylinder 30 to be extended and contracted in conjunction with rotation of the booms 4 in the left and right roll direction, and a metal spring 60 serving as an elastic member provided at a symmetric position to the fluid pressure cylinder 30 with respect to the support shaft 6, the metal spring 60 to be extended and contracted in conjunction with the rotation of the booms 4 in the left and right roll direction. As the metal spring 60, a coil spring is used. However, other types of springs may be used.

The fluid pressure cylinder 30 includes a cylinder tube 31 in which working oil serving as a working fluid is enclosed, and a piston rod 32 slidably inserted into the cylinder tube 31. In the fluid pressure cylinder 30, the working oil is used. However, instead of the working oil, for example, a working fluid such as a soluble alternative liquid may be used.

The cylinder tube 31 is rotatably coupled to the elevating base 3 via a bracket 39. A leading end section of the piston rod 32 is rotatably coupled to the roll base 5 via a bracket 37. In such a way, the cylinder tube 31 is coupled to the working vehicle 90 via the elevating base 3, and the piston rod 32 is coupled to the booms 4 via the roll base 5. Thereby, when the booms 4 are rotated in the roll direction, the fluid pressure cylinder 30 is extended and contracted.

The present invention is not limited to the above configuration. The piston rod 32 may be coupled to the working vehicle 90 via the elevating base 3 and the cylinder tube 31 may be coupled to the booms 4 via the roll base 5. A coupling mechanism is not limited to the brackets but any mechanism may be used as long as the mechanism can rotatably couple the fluid pressure cylinder 30 between the elevating base 3 and the roll base 5.

A piston 33 slidable along an inner peripheral surface of the cylinder tube 31 is provided in an end section of the piston rod 32. An interior of the cylinder tube 31 is defined into a rod side chamber 34 and a piston side chamber 35 by the piston 33. A flow passage 38 which allows the rod side chamber 34 to communicate with the piston side chamber 35 is provided in the piston 33. The fluid pressure cylinder 30 is a single-acting type fluid pressure cylinder to be driven by supplying and discharging the working oil to and from the piston side chamber 35. In the configuration shown in Fig. 4, the rod side chamber 34 and the piston side chamber 35 communicate with each other by the flow passage 38. However, instead of this, a seal member may be provided in the piston 33 to eliminate the flow passage 38 and the rod side chamber 34 may communicate with the atmosphere.

An accumulator 50 is connected to the piston side chamber 35. In accordance with the rotation of the booms 4 in the roll direction, the working oil of the piston side chamber 35 flows into and out of the accumulator 50. The accumulator 50 includes an oil chamber 52 communicating with the piston side chamber 35, a gas chamber 51 in which a compressed gas to pressurize the oil chamber 52 is stored, and a partition member 53 partitioning the gas chamber 51 and the oil chamber 52. By being connected to the accumulator 50, the fluid pressure cylinder 30 generates bias force to bias the booms 4 in the right roll direction via the roll base 5. The partition member 53 may be any type such as a free piston, bellows, and a bladder. When the gas of the gas chamber 51 is not soluble to the working oil, the partition member 53 is not necessarily provided.

In a flow passage 55 which allows the oil chamber 52 of the accumulator 50 to communicate with the piston side chamber 35 of the fluid pressure cylinder 30, a damping valve 54 serving as a throttle is provided. In accordance with extension and contraction of the fluid pressure cylinder 30, the working oil in the oil chamber 52 flowing into and out of the piston side chamber 35 passes through the damping valve 54. At this time, because the damping valve 54 gives resistance to a flow of the working oil, damping force is generated to suppress vibration of the booms 4 in the roll direction. The damping valve 54 is a variable throttle whose opening area is increased in accordance with an increase in flow speed of the passing working oil. In the flow passage 55, instead of the damping valve 54, a constant throttle such as an orifice or a throttle with which a flow passage area or flow passage length can be manually adjusted may be provided. Although the damping valve 54 is provided in the flow passage 55, instead of this, the damping valve 54 may be provided in the flow passage 38 of the piston 33 which allows the rod side chamber 34 to communicate with the piston side chamber 35. In this configuration, in accordance with the extension and the contraction of the fluid pressure cylinder 30, the volume of the rod side chamber 34 and the volume of the piston side chamber 35 are changed and the working oil passes through the flow passage 38. At this time, because the damping valve 54 gives the resistance to the working oil flowing through the flow passage 38, the damping force is generated.

One end section of the metal spring 60 is supported by a spring bearing 61 attached to the elevating base 3, and the other end section is supported by a spring bearing 62 attached to the roll base 5. The metal spring 60 is placed between the elevating base 3 and the roll base 5 in a compressed state. The metal spring 60 biases the booms 4 in the left roll direction via the roll base 5.

The boom sprayer 1 includes a working fluid supply and discharge device 70 configured to supply and discharge the working oil to and from the fluid pressure cylinder 30. When the working fluid supply and discharge device 70 supplies and discharges the working oil to and from the fluid pressure cylinder 30, the fluid pressure cylinder 30 is extended and contracted and a roll angle of the booms 4 is adjusted to have a set value. The working fluid supply and discharge device 70 forms a roll angle adjustment device configured to adjust the roll angle of the booms 4 by rotating the booms 4 in the roll direction.

The working fluid supply and discharge device 70 includes a supply and discharge passage 71 communicating with the piston side chamber 35 of the fluid pressure cylinder 30, an operation check valve 72 placed in the supply and discharge passage 71, and a direction switching valve 77 adapted to switch between communication of the supply and discharge passage 71 with a hydraulic pump 74 and communication of the supply and discharge passage with a tank 75.

A supply passage 78 through which the working oil discharged from the hydraulic pump 74 is guided, a discharge passage 79 through which the working oil is returned to the tank 75, an operation passage 73 communicating with a pilot pressure chamber of the operation check valve 72, and the supply and discharge passage 71 communicating with the piston side chamber 35 are connected to the direction switching valve 77.

The direction switching valve 77 has a left roll position a, a right roll position b, and a neutral position c. These positions are switched by an operator operating a lever 76. Instead of the lever 76, input settings and operations of the direction switching valve 77 may be electrically performed by using a controller or the like.

When the direction switching valve 77 is switched to the left roll position a, the supply passage 78 and the operation passage 73 communicate with each other, and the supply and discharge passage 71 and the discharge passage 79 communicate with each other. Accordingly, the operation check valve 72 is opened by discharge pressure of the hydraulic pump 74 guided as pilot pressure through the operation passage 73, and the piston side chamber 35 communicates with the tank 75 through the supply and discharge passage 71 and the discharge passage 79. At this time, the metal spring 60 biases the booms 4 in the left roll direction. Thus, the piston side chamber 35 is contracted by bias force of the metal spring 60, the fluid pressure cylinder 30 makes a contraction action, and the booms 4 are rotated in the left roll direction.

When the direction switching valve 77 is switched to the right roll position b, the discharge passage 79 and the operation passage 73 communicate with each other, and the supply and discharge passage 71 and the supply passage 78 communicate with each other. Accordingly, the working oil discharged from the hydraulic pump 74 flows into the piston side chamber 35 through the supply passage 78 and the supply and discharge passage 71. At this time, since the flow passage 55 is constricted by the damping valve 54, the working oil is preferentially supplied to the piston side chamber 35. At this time, the metal spring 60 biases the booms 4 in the left roll direction. However, as pressure of the piston side chamber 35 is boosted, the fluid pressure cylinder 30 makes an extension action while compressing the metal spring 60. Therefore, the booms 4 are rotated in the right roll direction.

When the direction switching valve 77 is switched to the neutral position c, the supply passage 78, the discharge passage 79, the operation passage 73, and the supply and discharge passage 71 all communicate with each other. Accordingly, all the working oil supplied from the hydraulic pump 74 through the supply passage 78 is returned to the tank 75. At this time, pressure of the operation passage 73 becomes equal to that of the tank 74, and the operation check valve 72 is closed by the bias force of the spring. Thereby, the extension and contraction actions of the fluid pressure cylinder 30 are stopped, and the rotation of the booms 4 is stopped at a position where the bias force by the fluid pressure cylinder 30 and the bias force by the metal spring 60 are balanced.

In such a way, by the operator operating the direction switching valve 77, the booms 4 are rotated in the left and right roll direction and stopped. Thereby, the roll angle of the booms 4 is adjusted.

The working fluid supply and discharge device 70 is not limited to the configuration in which the working oil is supplied to and discharged from the piston side chamber 35 of the fluid pressure cylinder 30 and the booms 4 are rotated in the roll direction but may have a configuration in which the working oil is supplied to and discharged from the rod side chamber 34 and the booms 4 are rotated in the roll direction.

Next, actions of the boom vibration control device 9 will be described.

Pressure of the gas chamber 51 of the accumulator 50 acts on the piston 33 via the piston side chamber 35. As a result, the bias force to rotate in the right roll direction acts on the booms 4 via the piston rod 32 extending from the piston 33. Meanwhile, the metal spring 60 is placed between the elevating base 3 and the roll base 5 in a compressed state. As a result, the bias force to rotate in the left roll direction acts on the booms 4. Therefore, the booms 4 are held at the position where the bias force to rotate in the right roll direction by the fluid pressure cylinder 30 and the bias force to rotate in the left roll direction by the metal spring 60 are balanced. The gas is preliminarily charged in the gas chamber 51 in such a manner that the pressure acting on the piston 33 becomes bias force balanced with the bias force of the metal spring 60.

The boom sprayer 1 sprays the pest control liquid from the nozzles of the booms 4 while the working vehicle 90 travels in the agricultural field. At this time of operation, the working vehicle 90 travels while getting over undulation in the agricultural field, and a posture of the working vehicle 90 may be rotated in the left and right roll direction.

In a case where the posture of the working vehicle 90 is changed in the right roll direction, force to rotate the booms 4 in the right roll direction is applied onto the roll base 5 via the fluid pressure cylinder 30. At this time, the booms 4 stay at the position by inertia. Thus, the piston rod 32 is pushed in by inertia force of the booms 4, and the fluid pressure cylinder 30 is contracted. When the fluid pressure cylinder 30 is contracted, the working oil of the piston side chamber 35 is pushed out by the piston 33 and flows into the oil chamber 52 in the accumulator 50. The gas chamber 51 is compressed by the working oil flowing into the accumulator 50 and absorbs relative displacement in the roll direction between the elevating base 3 and the booms 4. Therefore, the booms 4 are held at the horizontal position.

Conversely, when the working vehicle 90 is inclined in the left roll direction, force to rotate the booms 4 in the left roll direction is applied onto the roll base 5 via the metal spring 60. At this time, the booms 4 stay at the position by inertia. Thus, the metal spring 60 is contracted by the inertia force of the booms 4 and absorbs relative displacement in the roll direction between the elevating base 3 and the booms 4. Therefore, the booms 4 are held at the horizontal position.

As described above, in the boom vibration control device 9, while absorbing the relative displacement in the roll direction between the elevating base 3 and the booms 4 by actions of the gas chamber 51 of the accumulator 50 and the metal spring 60, the booms 4 are held at the horizontal position. Thus, vibration of the booms 4 in the roll direction is suppressed.

By providing the damping valve 54 in the flow passage 55 providing communication between the oil chamber 52 of the accumulator 50 and the piston side chamber 35, the resistance is given to the fluid coming and going between the piston side chamber 35 and the oil chamber 52 at the time of vibration. Thus, the vibration in the roll direction can be promptly damped.

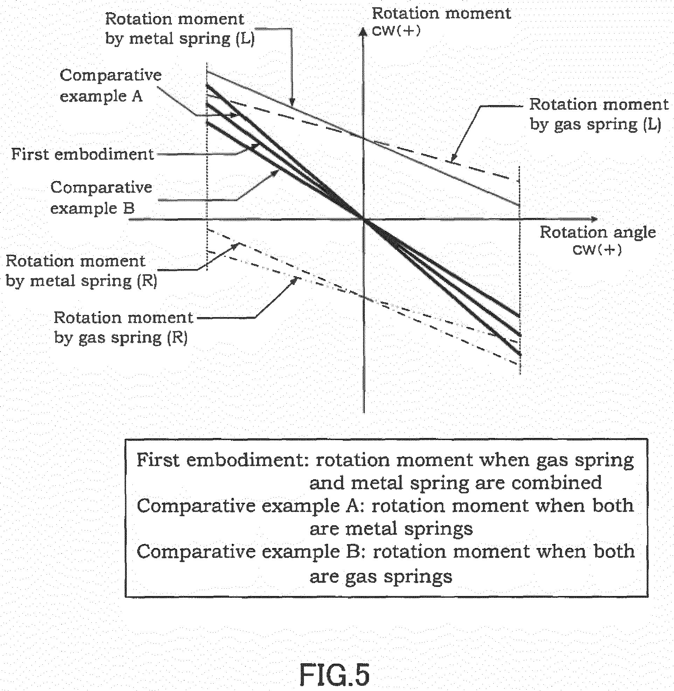

Fig. 5 shows characteristics of a relationship between a rotation angle and rotation moment of the booms 4. In Fig. 5, the horizontal axis indicates the rotation angle of the booms 4, and the vertical axis indicates the rotation moment of the booms 4.

In Fig. 5, a characteristic in a case where the fluid pressure cylinder 30 and the accumulator 50 (hereinafter, a configuration in which the fluid pressure cylinder 30 and the accumulator 50 are combined will be simply referred to as the "gas spring") are used as a mechanism for biasing the booms 4 in the right roll direction (hereinafter, simply referred to as the "right roll direction bias mechanism") is indicated as a gas spring (R). Similarly, a characteristic in a case where the metal spring is used as the right roll direction bias mechanism is indicated as a metal spring (R), a characteristic in a case where the gas spring is used as a mechanism for biasing the booms 4 in the left roll direction (hereinafter, simply referred to as the "left roll direction bias mechanism") is indicated as a gas spring (L), and a characteristic in a case where the metal spring is used as the left roll direction bias mechanism is indicated as a metal spring (L).

The first embodiment shown in Fig. 5 is a configuration in which the right roll direction bias mechanism is the gas spring and the left roll direction bias mechanism is the metal spring 60. Characteristics thereof are formed by combining the characteristics of the gas spring (R) and the metal spring (L). A comparative example A is a configuration in which both the left and right roll direction bias mechanism are metal springs. Characteristics thereof are formed by combining the characteristics of the metal spring (R) and the metal spring (L). A comparative example B is a configuration in which both the left and right roll direction bias mechanism are gas springs. Characteristics thereof are formed by combining the characteristics of the gas spring (R) and the gas spring (L).

The gas spring has a lower spring constant than that of the metal spring. Therefore, in the first embodiment in which the right roll direction bias mechanism is the gas spring and the left roll direction bias mechanism is the metal spring, the rotation moment is smaller than that of the comparative example A in which both the roll direction bias mechanism are the metal springs. When both the mechanism are the metal springs as in the comparative example A, the spring constant is increased and the rotation moment is increased. When the rotation moment is increased, at the time of inclination of the working vehicle 90, the relative displacement in the roll direction between the elevating base 3 and the booms 4 cannot sufficiently be absorbed and the booms 4 cannot be held in a horizontal state.

In the first embodiment in which the right roll direction bias mechanism is the gas spring and the left roll direction bias mechanism is the metal spring 60, the rotation moment is larger than that of the comparative example B in which both the roll direction bias mechanism are the gas springs. When both the mechanism are the gas springs as in the comparative example B, the spring constant is decreased and the rotation moment is decreased. When the rotation moment is decreased, at the time of the inclination of the working vehicle 90, the relative displacement in the roll direction between the elevating base 3 and the booms 4 can be more absorbed. However, a seal member exists in the piston rod 32 and the cylinder tube 31 of the fluid pressure cylinder 30, and the friction resistance is generated by this seal member. Since the spring constant is small in the comparative example B, an influence due to the friction resistance is relatively increased. Therefore, by the friction resistance, overdamping in which the vibration of the booms 4 is radically damped is generated, and there is a fear that the booms 4 cannot be held in a horizontal state. Further, there is a fear that by the friction resistance, the booms 4 are stopped before returning to the neutral position or not rotated but stopped at the neutral position. In order to form the gas spring, the fluid pressure cylinder and the accumulator are required. Thus, cost is high and an installation space is also required.

Therefore, by adopting the configuration shown in the first embodiment as the boom vibration control device 9, the following operations and effects are exerted.

Vibration of the elevating base 3 of the working vehicle 90 can be absorbed by the accumulator 50 having the gas chamber 51 and the metal spring 60 and prevented from being transmitted to the booms 4. By forming one of the roll direction bias mechanism of the booms 4 by the metal spring 60, the friction resistance is reduced. Thus, the overdamping can be suppressed and the neutral position of the booms 4 can be stabilized. Further, by forming one of the roll direction bias mechanism by the metal spring 60, in comparison to a case where both the roll direction bias mechanism are formed by using a fluid pressure actuator and an accumulator, cost can be suppressed and a space can also be saved.

### <Second Embodiment>

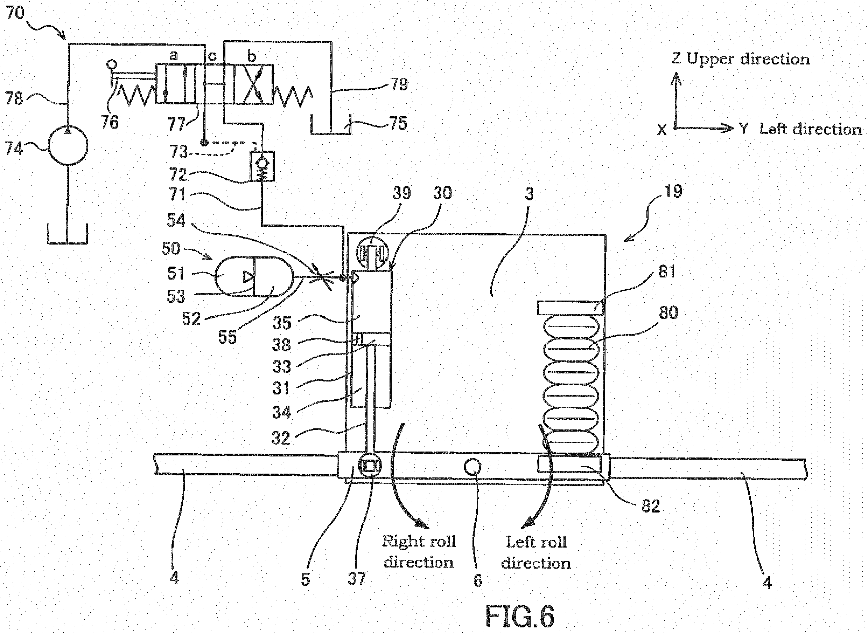

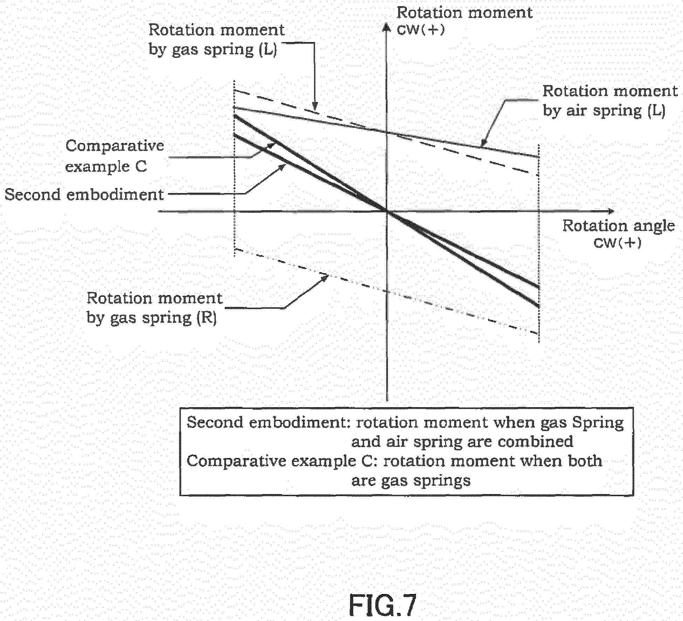

With reference to Figs. 6 and 7, a boom vibration control device 19 according to a second embodiment of the present invention will be described. Hereinafter, points different from the above first embodiment will be mainly described and the same configurations as those of the boom vibration control device of the first embodiment will be given the same reference signs and description thereof will be omitted.

The second embodiment is different from the above first embodiment in a point where the mechanism for biasing the booms 4 in the left roll direction is an air spring 80. The air spring 80 is placed between a receiving base 81 attached to the elevating base 3 and a receiving base 82 attached to the roll base 5 in a compressed state. Therefore, bias force of the air spring 80 acts in such a manner that the booms 4 are rotated in the left roll direction. In Fig. 6, a multistage bellows type air spring is used as the air spring 80. However, any type of air spring may be used.

Fig. 7 shows characteristics of a relationship between a rotation angle and rotation moment of the booms 4. In Fig. 7, a characteristic in a case where the fluid pressure cylinder 30 and the accumulator 50 (hereinafter, a configuration in which the fluid pressure cylinder 30 and the accumulator 50 are combined will be simply referred to as the "gas spring") are used as a right roll direction bias mechanism for the booms 4 is indicated as a gas spring (R). Similarly, a characteristic in a case where the gas spring is used as a left roll direction bias mechanism for the booms 4 is indicated as a gas spring (L), and a characteristic in a case where the air spring is used as the left roll direction bias mechanism is indicated as an air spring (L).

The second embodiment shown in Fig. 7 is a configuration in which the right roll direction bias mechanism is the gas spring and the left roll direction bias mechanism is the air spring 80. Characteristics thereof are formed by combining the characteristics of the gas spring (R) and the air spring (L). A comparative example C is a configuration in which both the left and right roll direction bias mechanism are gas springs. Characteristics thereof are formed by combining the characteristics of the gas spring (R) and the gas spring (L). [0063] The air spring 80 has a smaller spring constant than that of the gas spring. Therefore, in the second embodiment, by using the air spring as the bias mechanism for biasing in the left roll direction, the spring constant is lowered and the rotation moment is decreased in comparison to the comparative example C. When the working vehicle 90 travels while getting over the undulation in the agricultural field and the posture of the working vehicle 90 is rotated in the left and right roll direction, in the second embodiment in which the spring constant is lower than that of the comparative example C, the gas spring and the air spring are easily contracted, and the relative displacement in the roll direction between the elevating base 3 and the booms 4 are absorbed. Therefore, the booms 4 can be furthermore maintained in a horizontal state. Since no part where the friction resistance is generated exists in the air spring, as well as the first embodiment, the overdamping due to the friction resistance can be suppressed and the neutral position can be stabilized.

According to the above second embodiment, in addition to the operations and the effects of the first embodiment, the following effect is exerted.

By forming the left roll direction bias mechanism for the booms 4 by the air spring 80, an effect in which vibration of the working vehicle 90 can be absorbed by the gas spring and the air spring 80 and furthermore prevented from being transmitted to the booms 4 is exerted.

### <Third Embodiment>

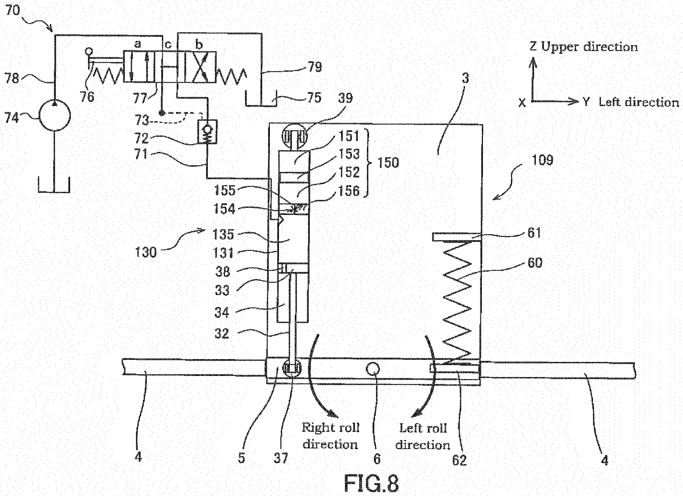

With reference to Fig. 8, a boom vibration control device 109 according to a third embodiment of the present invention will be described. Hereinafter, points different from the above first embodiment will be mainly described and the same configurations as those of the boom vibration control device of the first embodiment will be given the same reference signs and description thereof will be omitted.

The third embodiment is different from the above first embodiment in a point where a fluid pressure cylinder 130 in which the accumulator 50 and the fluid pressure cylinder 30 in the first embodiment are integrated is formed.

Specifically, inside a cylinder tube 131, a free piston 153 serving as a partition member is slidably inserted. On the side of an end section of the cylinder tube 131, a gas chamber 151 is defined by the free piston 153. A partition wall 156 is provided between the free piston 153 and the piston 33. Inside the cylinder tube 131, a piston side chamber 135 is defined by the piston 33 and the partition wall 156, and an oil chamber 152 is defined by the free piston 153 and the partition wall 156. An accumulator 150 is formed by the gas chamber 151, the oil chamber 152, the free piston 153, and the partition wall 156. A flow passage 155 providing communication between the piston side chamber 135 and the oil chamber 152 is provided in the partition wall 156. A damping valve 154 is provided in the flow passage 155.

Since the boom vibration control device 109 formed as above is operated similarly to the boom vibration control device 9 of the first embodiment, description thereof will be omitted.

The partition member is not limited to the free piston but may be any type such as bellows and a bladder. As long as the gas of the gas chamber is not soluble to the working oil, the partition member is not necessarily provided. Instead of the damping valve 154, a constant throttle such as an orifice or a configuration with which a flow passage area or flow passage length can be manually adjusted may be provided.

According to the above third embodiment, in addition to the operations and the effects of the first embodiment, the following effect is exerted.

Since the accumulator 150 is integrally formed in the fluid pressure cylinder 130, a pipe for connecting the accumulator 150 is not required. Thus, an effect in which assembling man-hour can be reduced and a space can be saved is exerted.

### <Fourth Embodiment>

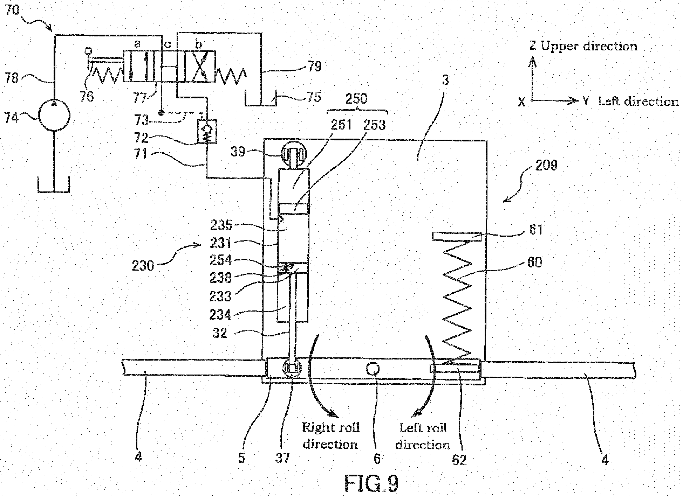

With reference to Fig. 9, a boom vibration control device 209 according to a fourth embodiment of the present invention will be described. Hereinafter, points different from the above third embodiment will be described and the same configurations as those of the boom vibration control device of the third embodiment will be given the same reference signs and description thereof will be omitted.

The fourth embodiment is different from the above third embodiment in a point where a fluid pressure cylinder 230 formed by removing the partition wall 156 from the fluid pressure cylinder 130 in the third embodiment is provided.

Specifically, inside a cylinder tube 231, a free piston 253 serving as a partition member is slidably inserted. On the side of an end section of the cylinder tube 231, a gas chamber 251 is defined by the free piston 253. A piston side chamber 235 is defined by a piston 233 and the free piston 253.

Pressure of the gas chamber 251 acts on the piston 233 via the piston side chamber 235 and biases the booms 4 in the right roll direction via the piston rod 32. When the booms 4 are rotated in the right roll direction, by the pressure of the gas chamber 251, the working oil of the piston side chamber 235 pushes the piston 233 via the free piston 253, and the piston rod 32 is extended. Conversely, when the booms 4 are rotated in the left roll direction, the piston rod 32 is contracted, and the working oil of the piston side chamber 235 is pushed by the piston 233 and contracts the gas chamber 251 via the free piston 253.

In the fourth embodiment, the gas chamber 251 and the free piston 253 forms an accumulator 250. In the fourth embodiment, a damping valve 254 is provided in a flow passage 238 providing communication between the piston side chamber 235 and a rod side chamber 234 of the piston 233. In accordance with extension and contraction of the fluid pressure cylinder 230, the volume of the piston side chamber 235 and the volume of the rod side chamber 234 are changed and the working oil passes through the flow passage 238. At this time, by giving the resistance to the working oil flowing through the flow passage 238 by the damping valve 254, the damping force is generated.

The partition member is not limited to the free piston but may be any type such as bellows and a bladder. As long as the gas of the gas chamber is not soluble to the working oil, the partition member is not necessarily provided. Instead of the damping valve 254, a constant throttle such as an orifice or a configuration with which a flow passage area or flow passage length can be manually adjusted may be provided.

According to the above fourth embodiment, in addition to the operations and the effects of the third embodiment, the following effect is exerted.

Since there is no need for providing a partition wall, an effect in which a space can be furthermore saved is exerted.

### <Fifth Embodiment>

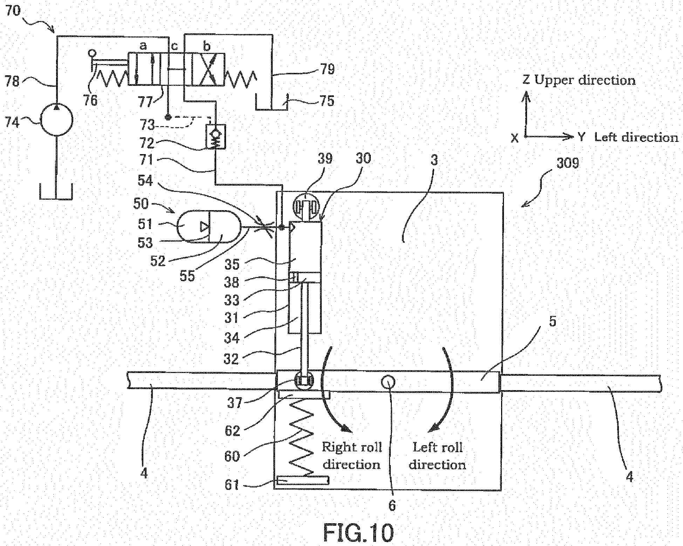

With reference to Fig. 10, a boom vibration control device 309 according to a fifth embodiment of the present invention will be described. Hereinafter, points different from the above first embodiment will be described and the same configurations as those of the boom vibration control device of the first embodiment will be given the same reference signs and description thereof will be omitted.

The fifth embodiment is different from the above first embodiment in a point where the fluid pressure cylinder 30 and the metal spring 60 in the first embodiment are arranged at positions facing each other across the roll base 5.

In the boom vibration control device 309 formed in such a way, bias force to bias the booms 4 in the right roll direction acts by the fluid pressure cylinder 30, and bias force to bias the booms 4 in the left roll direction acts by the metal spring 60. Therefore, the boom vibration control device 309 is operated similarly to the boom vibration control device 9 of the first embodiment.

According to the above fifth embodiment, in addition to the operations and the effects of the first embodiment, the following effect is exerted.

Since the fluid pressure cylinder 30 and the metal spring 60 are arranged on one side of the support shaft 6 of the roll base 5, an effect in which a space on the other side can be effectively utilized is exerted.

### <Sixth Embodiment>

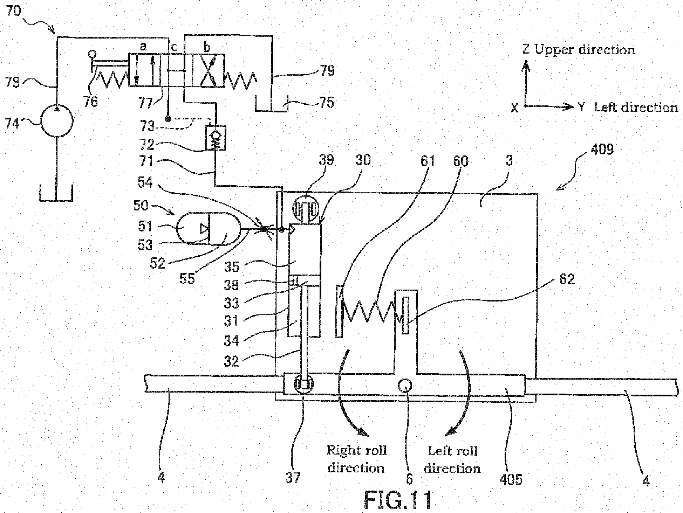

With reference to Fig. 11, a boom vibration control device 409 according to a sixth embodiment of the present invention will be described. Hereinafter, points different from the above first embodiment will be described and the same configurations as those of the boom vibration control device of the first embodiment will be given the same reference signs and description thereof will be omitted.

The sixth embodiment is different from the above first embodiment in a point where a roll base 405 is formed in a T shape.

In the boom vibration control device 409 formed in such a way, bias force to bias the booms 4 in the right roll direction acts by the fluid pressure cylinder 30, and bias force to bias the booms 4 in the left roll direction acts by the metal spring 60. Therefore, the boom vibration control device 409 is operated similarly to the boom vibration control device 9 of the first embodiment.

According to the above sixth embodiment, in addition to the operations and the effects of the first embodiment, the following effect is exerted.

Since the fluid pressure cylinder 30 and the metal spring 60 are arranged on one side of the support shaft 6 of the roll base 5, a space on the other side can be effectively utilized.

When a projecting section of the roll base 405 formed in a T shape is extended and the metal spring 60 biases the roll base 405 at a position distant from the support shaft 6, the bias force of the metal spring 60 can be reduced. Therefore, an effect in which size of the metal spring 60 can be reduced is exerted.

Embodiments of this invention were described above, but the above embodiments are merely examples of applications of this invention, and the technical scope of this invention is not limited to the specific constitutions of the above embodiments.

For example, in the first to sixth embodiments, the fluid pressure cylinder biases the booms in the right roll direction. However, the fluid pressure cylinder may bias the booms in the left roll direction. In the first to fourth embodiments, the booms are biased from the upper surface side by the fluid pressure cylinder and the elastic member. However, the booms may be biased from the lower surface side. The boom sprayer may be not only a self-propelled type including an engine, a motor, and the like but also any of a traction type in which the boom sprayer is tracked by a traveling body including an engine, a motor, and the like, and a mount type in which the boom sprayer is installed and used in a vehicle body of a tracker or the like.

This application claims priority based on Japanese Patent Application No.2014-143698 filed with the Japan Patent Office on July 11, 2014, the entire contents of which are incorporated into this specification.

## Claims

1. A boom vibration control device for suppressing vibration of a boom rotatably and axially supported on a boom support body, comprising:
a fluid pressure cylinder provided between the boom and the boom support body, the fluid pressure cylinder being configured to bias the boom in one rotating direction; and
an elastic member provided between the boom and the boom support body, the elastic member being configured to bias the boom in the other rotating direction.

2. The boom vibration control device according to claim 1, wherein the fluid pressure cylinder includes:
a cylinder tube coupled to any one of the boom support body and the boom, a working fluid being enclosed in the cylinder tube;
a piston rod coupled to the other one of the boom support body and the boom, the piston rod being inserted into the cylinder tube; and
a piston coupled to the piston rod, the piston partitioning an interior of the cylinder tube into a rod side chamber and a piston side chamber, and
the boom vibration control device includes an accumulator which has a gas chamber pressurizing one of the rod side chamber and the piston side chamber.

3. The boom vibration control device according to claim 1, wherein the elastic member is a metal spring.

4. The boom vibration control device according to claim 1, wherein the elastic member is an air spring.

5. A boom sprayer, comprising:
the boom vibration control device according to claim 1.
